# EUROPEAN PATENT APPLICATION

(11) **EP 1 935 576 A1**
(43) Date of publication of application: **25.06.2008**
(21) Application number: 06126637.5
(22) Date of filing: 20.12.2006
(51) Int. Cl.: B25J 9/16

(54) **An industrial robot system**

(71) Applicant: ABB AB, 721 83 Västerås (SE)
(72) Inventor: Persson, Roger L, 722 22 Västerås (SE)
(74) Representative: Reyier, Ann-Mari

(57) **Abstract**

The present invention relates to an industrial robot system comprising a manipulator (1), a robot controller (2) controlling the movements of the manipulator, and a remote device (3) adapted to communicate with the robot controller and to send instructions to the robot controller for performing a desired operation on the robot controller. The remote device is adapted to send the instructions to the robot controller in the form of script procedures (10) including instructions written in a script language that does not need to be compiled, and the robot controller is adapted to receive the program procedures and to execute them in order to perform the desired operation.

## Description

### FIELD OF THE INVENTION

The present invention relates to an industrial robot system comprising a manipulator, a robot controller controlling the movements of the manipulator and a remote device adapted to communicate with and send instructions to the robot controller.

The present invention also relates to a robot controller adapted to communicate with and to receive instructions from the remote device.

The invention also relates to a method for controlling an industrial robot system.

The invention is useful for any type of industrial robot system, for example including a parallel kinematic manipulator or a serial kinematic manipulator. The remote device is for example a personnel computer (PC), a teach pendant unit (TPU), or a mobile phone, a pocket PC, or a remote server.

### PRIOR ART

An industrial robot system includes a robot controller controlling one or more manipulators. Often, the robot system also includes one or more remote service devices, which are communicating with the robot controller. A robot controller has a main computer, which often is a powerful personnel computer with a real time operating system in the bottom and robot controller software on top. The robot controller software includes a huge amount of compiled source code, configuration files, installation scripts and robot programs written in a robot language. The controller is capable of controlling a wide variety of manipulators, interacting with a number of I/O field buses, and communicating with remote servers and hosts using Ethernet type communication.

The Ethernet communication is today typically performed through a communication system that uses sockets and COM-servers to expose robot control services to the world. These services are used by a number of remote devices. The communication system was designed with a permanent, high speed, network and powerful remote devices in mind. In some cases, the design requires several calls to the robot controller in order to perform simple operations, such as performing a backup, starting a robot program, or extracting information from the robot controller. In many cases, additional computations need to be done on the remote device in order to make something out of all the information that was collected from the robot controller.

There is an increasing demand to create more and more complex application for the robot controller, and thereby making it possible to introduce robot controllers on new markets. These applications should be flexible, easy to use and yet cheap to produce.

There is also an increasing demand to enable more so called "smart devices", such as small teach pendants and remote service devices, to use functionality of the robot controller. Some of the "smart devices" require large distances and small bandwidth, for instance mobile phone technologies.

All of this creates the following problems:
- The communication system has to constantly change in order to comply with new applications and demands, leading to increasing development, test, and maintenance costs.
- Multiple calls via the communication system increase the network load.
- The need of additional computing of the controller information on the client side makes it hard to use "smart devices".
- The powerful robot controller computing power is in many cases not fully utilized and acts as a simple database. This is particularly true in the commissioning and maintenance phases of the controller life cycle.
- The communication system cannot adapt fast enough to all new application requirements. As a result, the introduction of new applications on the market might be delayed, and thus in many cases missing the market opportunity.

### OBJECTS AND SUMMARY OF THE INVENTION

The object of the present invention is to provide a solution that alleviates the problems mentioned above.

According to one aspect of the invention, this object is achieved by an industrial robot system as defined in claim 1.

Such an industrial robot system is characterized in that the remote device is adapted to send instructions to the robot controller in the form of script procedures including instructions written in a language that does not need to be compiled, and the robot controller is adapted to receive the script procedures and to execute them in order to perform a desired operation.

According to the invention, it is possible for the remote device to send program procedures, in the following denoted script procedures, including program instructions written in a language that does not need to be compiled to the robot controller. Since the program procedures do not need to be compiled, the robot controller can execute the procedures immediately upon receiving them. The robot controller executes the program instructions included in the procedure, and the remote device only has to collect the result from this execution. This enables even the most basic remote device to perform complex operations on the robot controller. Moreover, the load on the network communication will be reduced since the robot controller only has to return the result of the execution.

The following advantages are gained by the present invention:
- The communication system would not need to change as frequently as today, which will reduce costs for development, test and maintenance.
- The possibility to send remote script procedures would make it possible for remote devices to get access to the processing power of the main computer of the robot controller. This means that "smart devices" can write scripts that perform most operations on the robot controller. The programming procedures can be written on the fly, or be stored depending on the type of application and specification of the remote device. Thus, the main computer processing capabilities will be more utilized.
- As fewer calls for the robot controller will be required, less information has to be sent on the communication network, which in turn decreases the network load and makes communication with the robot controller over large distances with reduced bandwidth more feasible.
- Responsiveness to application requirements can be improved since it is both easier and quicker to change the script procedures than the compiled program code. This applies to both the client and host side.
- Robot integrators can implement script procedures to run during the commissioning phase of the controller, in order to extract information from the robot, or when configuring subsystems, like for instance the system signals of the controller.

As the script procedure is written in a language that does not have to be compiled, the procedure can be run immediately upon receiving. There exits several program languages which do not require any compilation before it is run, such as Ruby, Perl and Lua. According to an embodiment of the invention the script language is Python®. Python® is a dynamic object oriented programming language and is distributed under an OSI-approved open source license that makes it free to use even for commercial products.

In order to be able to execute the script procedures, the robot controller comprises a script executor adapted to interpret and execute the received script procedures.

According to an embodiment of the invention, the robot controller is adapted to control the movements of the manipulator in accordance with a robot program written in a robot language, the robot program includes a call to the remote device requesting a script procedure, and the robot controller is adapted to identify, during execution of said robot program, a call to the remote device requesting said script procedure, based on the stored robot program instructions, and to send a request to the remote device for transfer of the script procedure. According to this embodiment, the robot language includes a reserved instruction, which is a call to the remote device requesting it to send a certain script procedure to the robot controller. This is an easy and rather safe way to transfer script procedures from the remote device to the robot controller.

According to another embodiment of the invention, the robot controller is adapted to repeatedly check whether a script procedure has been transferred to it from the remote device, and to execute the script procedure upon detecting its existence. This is a fast way to transfer the script procedure.

According to another aspect of the invention, this object is achieved by a robot controller as defined in claim 8.

According to another aspect of the invention, this object is achieved by a method for controlling an industrial robot system as defined in claim 12.

### BRIEF DESCRIPTION OF THE DRAWINGS

The invention will now be explained more closely by the description of different embodiments of the invention and with reference to the appended figure.

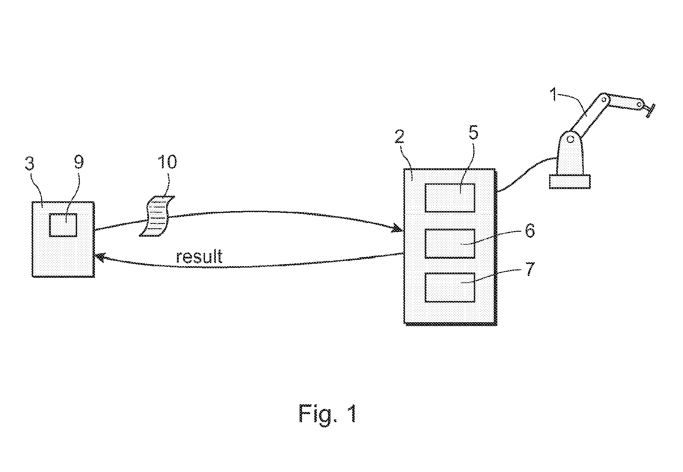

Fig. 1 shows an industrial robot system according to an embodiment of the invention.

### DETAILED DESCRIPTION OF PREFERRED EMBODIMENTS OF THE INVENTION

Figure 1 shows an industrial robot system including a manipulator 1, a robot controller 2 controlling the movements of the manipulator in accordance with a robot program written in a robot language, and a remote device 3 adapted to communicate with the robot controller. Preferably, the remote device 3 communicates with the robot controller 2 via a communication network of Ethernet type. The robot controller 2 comprises a storage unit 5 for storing robot programs including instructions for controlling the movements of the manipulator, a program executor 6 for executing the robot programs, and a script executor 7 adapted to interpret and execute script procedures written in a script language. The remote device 3 is, for example, a pocket PC, a mobile phone, a teach pendant unit (TPU), a remote server, or a remote personnel computer (PC).

The remote device 3 comprises a memory 9 for storing script procedures written in a script language, which is a language that does not need to be compiled. The script language is, for example, Python®. Each script procedure includes one or more program instructions written in a script language. The remote device 3 is adapted to send script procedures 10 to the robot controller 2, which is adapted to receive the script procedures and to execute them. When the robot controller has executed the script procedure, it returns the result of the procedure to the remote device. Preferable, the robot controller is adapted to receive script procedures from a plurality of remote devices. Thus, information on the identity of the remote device, or its IP-address, could be included with the script procedure in order to enable the robot controller to return the result of the execution of the procedure to correct remote device.

The script procedure is generated either automatically or manually. If the script procedure is automatically generated and sent to robot controller, the script procedure can be written beforehand. Another possibility is that the operator manually writes the script code and initiates the sending of the script procedure manually, for example by activating a send button.

The script may also be generated automatically at runtime. The script might consist of different small parts that are put together at runtime. A "small part" might be anything from only one row of script code up to several hundreds of rows depending on the size of the final script sent to the controller.

The script procedures written before hand are stored in the memory 9 on the remote device. The pre-stored script procedure is, for example, sent to the robot controller upon command of a user of the remote device. For instance, the remote device is a mobile phone used by a service technician and the script procedure includes instructions for determining whether or not there is time for service of the robot controller. The service technician initiates sending of the script procedure by activating a button on the mobile phone. The script procedure is then sent to the robot controller, which receives the script procedure and executes it. The result of the execution, i.e. whether or not there is time for service of the robot, is sent to the mobile phone.

It is also possible to automatically send a script procedure written before hand and stored in the memory 9, by including an instruction "send script to robot controller" in a program that is run on the remote device. In this case, the sending of the script procedure to the robot controller is automatically initiated by the program executer of the remote device upon identifying the "send script to robot controller" command during execution of the program.

Another possibility is that the user manually writes the script procedure on the remote device, for instance on a remoter PC, and sends the script procedure to the robot controller as soon as the procedure has been written. The sending of the script procedure is, for example, initiated by activating a "send script procedure" button on the remote device. The button is either a physical button or a soft button.

The robot controller may receive the script procedure in many different ways.

For example, the robot language may include a reserved instruction for invoking a script procedure on the remote device. Such an instruction can be as follows:
Run Script (A),
A is, for example, file data or a formatted text string, which is input to the script procedure. The "Run Script" instruction is a call to the remote device requesting a certain script procedure. When the program executor 6 runs a robot program and identifies a "Run Script" instruction, the program executor sends a request to the remote device requesting the specified script procedure and the remote device sends the requested script procedure to the robot controller upon receiving the request.

It is also possible to open a specific port in the TCP/IP protocol for receiving script procedures. The remote device sends the script procedure to a specific port of the robot controller and the robot controller polls the port, i.e. the robot controller repeatedly checks whether there is a script procedure waiting on the specific port, and when the robot controller finds a script procedure waiting at the port, it transfers it to the script executor which immediately executes the script procedure. This is a fast way of transferring a script procedure to the robot controller.

Another way to transfer a script procedure is via a file transfer protocol (FTP). The robot controller continuously checks whether a script has been written in a certain catalogue of the controller and executes the script as soon as the script procedure has been detected. As the FTP exposes the whole flash or hard drive to the client application, a specific directory needs to be specified for storing remote script procedures.
This method for transferring script procedure is simple.

It is also possible to create a virtual I/O device on the robot controller where scripts can be sent using FTP. The virtual device will act and behave as a normal mass-storage device (like an flash or hard drive) from a client point of view, but data will be written directly into the robot controller memory. The controller can then execute the data as soon as the data transmission is ready. This is a fast and simple way to transfer the script procedures.

The script procedure may include instructions for performing diagnostic operation of the robot controller, such as checking the temperature of all the fans in the controller. For example, the script procedure is automatically sent to the robot controller once a week. Temperatures of the fans are returned to the remote device. Another example of diagnostics would be to automatically check if any part of the robot controller is due for service thru sending a script to the robot controller on a monthly basis. In this case, the returned response could be a Boolean value.

The robot controller should preferably include written instructions, a so-called Software Development Kit (SDK), including rules for how the script procedures should be written. The program instructions of the script procedure must follow the syntax of the script language. The script code must be written in such a way that it can interact with the robot controller, and in particular with application interfaces (API) of the robot controller. Thus, the SDK should also include information of how to write the script procedures so that they can cooperate with the application interfaces of the robot controller.

The present invention is not limited to the embodiments disclosed but may be varied and modified within the scope of the following claims. For example, the number of remote devices is not limited. In the embodiment disclosed above, only one remote device is shown. However, the invention is equally applicable for a plurality of remote devices communicating with the robot controller. The script language does not have to be Python, the invention works with any script language, which does not have to be compiled.

## Claims

1. An industrial robot system comprising:
- a manipulator (1),
- a robot controller (2) controlling the movements of the manipulator, and
- a remote device (3) adapted to communicate with the robot controller and to send instructions to the robot controller for performing a desired operation on the robot controller,
**characterized in that** the remote device is adapted to send said instructions to the robot controller in the form of script procedures (10) including instructions written in a script language that does not need to be compiled, and the robot controller is adapted to receive said program procedures and to execute them in order to perform the desired operation.

2. The robot system according to claim 1, wherein said scrip language is Python®.

3. The robot system according to any of the previous claims, wherein the robot controller is adapted to return the result of the execution to the remote device.

4. The robot system according to any of the previous claims, wherein the robot controller is adapted to control the movements of the manipulator in accordance with a robot program written in a robot language, the robot program includes a call to the remote device requesting a script procedure and the robot controller is adapted to identify, during execution of said robot program, a call to the remote device requesting said script procedure, based on the stored robot program instructions, and to send a request to the remote device for transfer of the script procedure.

5. The robot system according to any of the previous claims, wherein the robot controller is adapted to repeatedly check whether a script procedure has been transferred to it from the remote device and to execute the script procedure upon detecting its existence.

6. The robot system according to any of the previous claims, wherein the robot controller comprises a script executer (7) adapted to interpret and execute the received program procedures.

7. Use of the robot system of any of the claims 1 - 6 for performing diagnostic operations on the robot controller.

8. A robot controller (3) for controlling the movements of an industrial robot, wherein the robot controller is adapted to communicate with at least one remote device (3) and to receive instructions from the remote device for performing a desired operation on the robot controller, **characterized in that** the robot controller is adapted to receive instructions from the remote device in the form of script procedures (10) including instructions written in a script language that does not need to be compiled and to execute the script procedures in order to perform the desired operation.

9. The robot controller according to claim 8, wherein the robot controller comprises a script executer (7) adapted to interpret and execute the received program procedures.

10. The robot controller according to claim 8 or 9, wherein the robot controller is adapted to return the result of the execution to the remote device.

11. The robot controller according to any of claims 8-10, wherein the robot controller is adapted to control the movements of the manipulator in accordance with a robot program written in a robot language, the robot program including a call to the remote device requesting a script procedure and the robot controller is adapted to identify, during execution of said robot program, a call to the remote device requesting said script procedure, based on the stored robot program instructions, and to send a request to the remote device for transfer of the script procedure.

12. The robot controller according to any of claims 8-11, wherein the robot controller is adapted to repeatedly check whether a script procedure has been transferred to it from the remote device and to execute the script procedure upon detecting its existence.

13. A method for controlling an industrial robot system comprising a manipulator, a robot controller (2) controlling the movements of the manipulator, and a remote device (3) adapted to communicate with the robot controller and to send instructions to the robot controller for performing a desired operation on the robot controller, **characterized in that** the remote device sends instructions to the robot controller in the form of script procedures including instructions written in a script language that does not need to be compiled, and the robot controller receives said program procedures and executes them in order to perform the desired operation.

14. The method according to claim 13, wherein said scrip language is Python®.

15. The method according to claim 13 or 14, wherein said instructions of the script procedure include instructions for performing diagnostic operations of the robot controller.
